# EUROPÄISCHE PATENTANMELDUNG

(11) **EP 3 147 112 A1**
(43) Veröffentlichungstag der Anmeldung: **29.03.2017**
(21) Anmeldenummer: 16188669.2
(22) Anmeldetag: 14.09.2016
(51) Int. Cl.: B29C 70/74, B29C 70/48, B29C 70/54, B33Y 80/00

(54) **HERSTELLUNG VON OBJEKTEN MIT FASERVERSTÄRKTEM BEREICH**

(30) Priorität: 18.09.2015 DE 102015115793
(71) Anmelder: Airbus Defence and Space GmbH, 82024 Taufkirchen (DE)
(72) Erfinder: Coquel, Maxime, 81667 München (DE)
(74) Vertreter: Isarpatent

(57) **Zusammenfassung**

Ein erfindungsgemäßes Verfahren eignet sich für ein Herstellen sowohl komplexer als auch stabiler Objekte (400, 500) verschiedenster Größe. Es umfasst ein Fertigen einer Objektstruktur (110, 210, 310, 410, 510) mit Hilfe eines generativen Fertigungsverfahrens und/oder mittels eines Spritzgießverfahrens; sowie ein Fertigen einer faserverstärkten Harzschicht (40, 50) in mindestens einem Teilbereich (111, 211, 411) der Objektstruktur.

## Beschreibung

Die Erfindung betrifft ein Verfahren zur Herstellung von Objekten und ein mit einem derartigen Verfahren hergestelltes Objekt.

Zur Herstellung von Objekten unterschiedlichster Art sind insbesondere generative Fertigungsverfahren bekannt, bei denen auf Grundlage dreidimensionaler Datenmodelle nacheinander mehrere Materiaschichten erzeugt und verfestigt werden. Das Ausgangsmaterial kann in fester, loser, viskoser oder flüssiger Form vorliegen und beispielsweise in einem Pulverbett gezielt geschmelzt oder in Schichten in einem Freiraum aufeinander aufgetragen werden, ehe es ausgehärtet wird.

Das Material kann dabei Metall und/oder Kunststoff umfassen. Nachteilig ist bei der bekannten Herstellung, dass das Verfahren relativ langsam ist. Zudem ist die Verwendung von Metall bei großen herzustellenden Objekten aufwendig und kostspielig. Bei Gebrauch von Kunststoff für derartige große Objekte ergibt sich hingegen eine relativ geringe Stabilität.

Aufgabe der vorliegenden Erfindung ist es, eine Technik bereitzustellen, das sich für die Herstellung sowohl komplexer als auch stabiler Objekte verschiedenster Größe eignet. Aufgabe ist es weiterhin, relativ leichte Objekte bereitzustellen, die mindestens in einem Teilbereich eine hohe Festigkeit haben.

Die Aufgabe wird gelöst durch ein Verfahren gemäß Patentanspruch 1 und ein Objekt gemäß Patentanspruch 15. Bevorzugte Ausführungsformen sind in den Unteransprüchen offenbart.

Ein erfindungsgemäßes Verfahren umfasst ein Fertigen einer Objektstruktur mit Hilfe eines generativen Fertigungsverfahrens und/oder mittels eines Spritzgießverfahrens sowie ein Fertigen einer faserverstärkten Harzschicht in mindestens einem Teilbereich der Objektstruktur.

Ein derartiges Verfahren ermöglicht ein schnelles Herstellen auch größerer Objekte, die infolge der faserverstärkten Harzschicht in dem Teilbereich eine große Festigkeit aufweisen. Auf diese Weise kann ein herzustellendes Objekt gezielt stabilisiert werden. Die Herstellung der Objektstruktur mit Hilfe des generativen Fertigungsverfahrens bzw. mittels des Spritzgießverfahrens erlaubt dabei eine materialsparende Herstellung einer komplexen geometrischen Form. Insbesondere kann beispielsweise mindestens ein funktionales Element wie z.B. ein Gewinde und/oder ein Halteelement (z.B. für eine oder mehrere elektronische Komponente(n)) in die Objektstruktur integriert werden.

Gemäß einer bevorzugten Ausführungsform wird die Objektstruktur mit einem oder mehreren Verstärkungssteg/en zur Versteifung gefertigt und/oder mit Führungen, die dazu eingerichtet sind, einen Fluss von Harzmaterial und/oder eine Ausrichtung von Fasermaterial bei der Fertigung der faserverstärkten Harzschicht zu lenken. Derartige Führungen können beispielsweise wenigstens eine Wandung umfassen, die eine Leitungsbahn begrenzt oder sogar einfasst. Gemäß einer weiteren Variante kann die Objektstruktur mit einem oder mehreren abgeschlossenen Luftkammern gefertigt werden. Auf diese Weise kann insbesondere in Bereichen des Objekts, die keiner Verstärkung durch eine faserverstärkte Harzschicht bedürfen, ein relativ großes Volumen des Objekts bei geringem Gewicht erzeugt werden.

Der Teilbereich kann z.B. auf einer (inneren oder äußeren) Oberfläche der Objektstruktur angeordnet sein. Eine Ausführungsform eines erfindungsgemäßen Verfahrens umfasst ein Einbringen der Objektstruktur mit der faserverstärkten Harzschicht in einen Vakuumsack und ein Aushärten der faserverstärkten Harzschicht in dem Vakuumsack. Damit können die Objektstruktur und die faserverstärkte Harzschicht auf einfache und kostengünstige Weise miteinander verpresst werden.

Gemäß einer vorteilhaften Ausführungsform ist der Teilbereich ganz oder teilweise im Innern der Objektstruktur angeordnet. Besonders bevorzugt ist eine Ausführungsvariante, bei der die faserverstärkte Harzschicht ganz oder teilweise in einem Hohlraum der Objektstruktur gefertigt wird.

Eine derartige Ausführungsform hat den Vorteil, dass die den Hohlraum aufweisende Objektstruktur auch bei relativ großem räumlichem Ausmaß schnell und mit geringem Materialverbrauch mit Hilfe des generativen Fertigungsverfahrens bzw. des Spritzgießens gefertigt werden kann.

Gemäß einer vorteilhaften Ausführungsform eines erfindungsgemäßen Verfahrens umfasst das Fertigen der faserverstärkten Harzschicht ein Injizieren von Harzmaterial in einen derartigen Hohlraum in der Objektstruktur. Dies erlaubt insbesondere ein abschließendes Fertigen der Objektstruktur, bevor das Harzmaterial in den Hohlraum injiziert wird. Insbesondere kann das in dem generativen Fertigungsverfahren bzw. Spritzgießverfahren verwendete Material vor dem Injizieren aushärten, und die Objektstruktur kann aus einer Vorrichtung zur generativen Fertigung bzw. aus einer Spritzgussform entnommen werden, ehe das Harzmaterial in den Hohlraum injiziert wird. Dadurch kann der vorrichtungstechnische Aufwand zur Herstellung verringert werden.

Ein derartiges Injizieren von Harzmaterial kann durch mindestens ein Infusionssystem erfolgen, das an die Objektstruktur angeformt sein kann. Ein solches Infusionssystem kann als Teil der Objektstruktur mit Hilfe des generativen Fertigungsverfahrens bzw. Spritzgießens erzeugt werden. Dies erlaubt ein besonders einfaches Ausformen des Infusionssystems.

Ein Infusionssystem zum Injizieren von Harzmaterial kann einen oder mehrere Verbindungsabschnitt/e zwischen dem Hohlraum und einer Umgebung der Objektstruktur umfassen, durch den bzw. die Harzmaterial eingeleitet und/oder Luft aus dem Hohlraum entweichen kann. Ein derartiger Verbindungsabschnitt kann beispielsweise als Luftkanal oder Spalt ausgebildet sein. Ein Infusionssystem kann eine Peripherie des Hohlraums ganz oder teilweise umgeben (z.B. Verbindungsabschnitte an einem oder mehreren Randpunkten des Hohlraums (bzw. einer flächigen Erstreckung des Hohlraums) umfassen sein oder einen als Verbindungsabschnitt dienenden Spalt, der den Hohlraum ringartig umläuft) und dazu eingerichtet sein, Harzmaterial vom Rand des Hohlraumes her in den Hohlraum einzuleiten. Alternativ oder zusätzlich kann das Infusionssystem dazu eingerichtet sein, den Hohlraum von dessen Zentrum her mit Harzmaterial zu füllen.

Ein Infusionssystem kann dazu eingerichtet sein, im hergestellten Objekt zu verbleiben. Eine Ausführungsvariante eines erfindungsgemäßen Verfahrens umfasst alternativ ein Entfernen mindestens eines Teils eines Infusionssystems zum Injizieren vom Harzmaterial.

Vorzugsweise umfasst die Objektstruktur eine erste und eine zweite Teilstruktur und wird die faserverstärkte Harzschicht zwischen der ersten und der zweiten Teilstruktur gefertigt. Dadurch die faserverstärkte Harzschicht besonders einfach in eine geeignete Form gebracht werden. Zudem kann eine äußere Oberfläche des herzustellenden Objektes, die dann mindestens teilweise mit einer Oberfläche der Objektstruktur übereinstimmen kann, auf einfache Weise komplex gestaltet werden.

Eine der beiden Teilstrukturen kann bei einer derartigen Ausführungsform bereits vorgefertigt vorliegen. Dadurch kann das Verfahren weiter beschleunigt werden. Beispielsweise kann eine derart vorgefertigte Teilstruktur eine für verschiedenartige Objekte geeignete geometrische Form aufweisen (z.B. eine einfache Platte oder Folie umfassen, die beispielsweise aus Plastik und/oder Metall hergestellt sein kann), wohingegen die andere der beiden Teilstrukturen eine für das herzustellende Objekt spezifische Gestalt haben kann. Eine derart vorgefertigte Teilstruktur kann mit Hilfe eines nichtgenerativen Fertigungsverfahrens hergestellt worden sein, beispielsweise durch Gießen, Extrudieren, Kalandrieren oder Blasformen. Alternativ können beide Teilstrukturen mittels eines generativen Fertigungsverfahrens gefertigt werden, und zwar beide mit Hilfe desselben oder mittels unterschiedlicher generativer Fertigungsverfahrens (und/oder unter Verwendung des gleichen Materials oder unterschiedlicher Materialien). Erste und zweite Teilstrukturen können beispielsweise nach dem Aushärten des Harzmaterials durch dieses fest miteinander verbunden werden.

Insbesondere kann eine derartige erste Teilstruktur eine (z.B. tellerartige) Vertiefung und/oder Aushöhlung aufweisen, die von der zweiten Teilstruktur der Objektstruktur abgedeckt wird. Damit kann auf einfache Weise ein Hohlraum in der Objektstruktur ausgebildet werden, in dem die faserverstärkte Harzschicht gefertigt werden kann.

Eine derartige Ausführungsform erlaubt ein besonders einfaches Einbringen von Fasermaterial in den Hohlraum: Insbesondere kann das Fasermaterial in die Vertiefung eingelegt und danach die zweite Teilstruktur gefertigt oder mit der ersten Teilstruktur verbunden werden.

Das Fertigen der faserverstärkten Harzschicht kann ein Aufsprühen von Harzmaterial auf den Teilbereich und/oder ein Positionieren der faserverstärkten Harzschicht als Film oder Matte umfassen. Insbesondere kann das Harzmaterial zusammen mit dem Fasermaterial auf- bzw. eingebracht werden, beispielsweise in Form eines vorimprägnierten Halbzeugs oder in Form von mit Fasern vermengtem Harzmaterial.

Das Fasermaterial kann beispielsweise ein Gelege, ein Vlies, ein Gewebe und/oder ein Geflecht umfassen. Es kann gepresst oder ungepresst sein und/oder beispielsweise Glasfasern und/oder Kohlenstofffasern umfassen. Es kann Kurzfasern (0,1-1mm lang), Langfasern (1 - 50mm) und/oder Endlosfasern (50mm oder länger) aufweisen. Die Fasern in dem Fasermaterial können gehärtet oder ungehärtet sein. Das Fasermaterial kann ein Gemisch aus verschiedenen Fasern umfassen, beispielsweise unterschiedlichen Materials und/oder unterschiedlicher Länge. Durch entsprechende Wahl des Fasermaterials können gezielt gewünschte Eigenschaften des herzustellenden Objekts erzeugt werden, beispielsweise hinsichtlich der Steifigkeit und/oder einer (elektrischen und/oder thermischen) Leitfähigkeit.

Vorteilhaft ist eine Ausführungsform, bei der das Fasermaterial Langfasern aufweist. Dadurch wird zum einen ein einfaches Einbringen des Fasermaterials in den Teilbereich (z.B. in einen Hohlraum der Objektstruktur) erreicht und zum anderen eine gute Steifigkeit der faserverstärkten Harzschicht und damit des Teilbereichs des hergestellten Objekts erzielt.

Gemäß einer vorteilhaften Ausführungsform eines erfindungsgemäßen Verfahrens umfasst das Fertigen der faserverstärkten Harzschicht ein Einbringen von Fasermaterial in den Hohlraum mittels Druckgas und/oder zusammen mit injiziertem Harzmaterial. Dies erlaubt insbesondere ein Einbringen des Fasermaterials erst nach Fertigstellung der Objektstruktur mit Hilfe des generativen Fertigungsverfahrens, so dass die Objektstruktur vor dem Einbringen des Fasermaterials aus einer Vorrichtung zur generativen Fertigung entnommen werden kann. Bei einer derartigen Ausführungsform ist insbesondere die Verwendung von Kurz- und/oder Langfasern vorteilhaft.

Eine vorteilhafte Ausführungsform eines erfindungsgemäßen Verfahrens umfasst ein Polymerisieren von Harzmaterial der faserverstärkten Harzschicht, beispielsweise durch Wärmebehandlung, Bestrahlen mit ultraviolettem Licht und/oder Gammastrahlung. Auf diese Weise kann die Struktur der faserverstärkte Harzschicht gezielt beeinflusst werden.

Das generative Fertigungsverfahren kann ein 3D-Drucken mittels Schmelzschichtung von Kunststoff, Kunstharz und/oder Verbundmaterial umfassen. Insbesondere kann die Objektstruktur auf diese Weise ebenfalls aus einem faserverstärkten Kunststoff gefertigt werden. So kann eine relativ große Festigkeit und Steifigkeit der Objektstruktur bei geringem Gewicht erzielt werden.

Gemäß einer vorteilhaften Ausführungsform eines erfindungsgemäßen Verfahrens wird die faserverstärkte Harzschicht in dem mindestens einen Teilbereich in einer ersten Dicke, mit einem ersten Harzmaterial, einem ersten Fasermaterial (das Fasern eines ersten Ausgangsmaterials, einer ersten Faserlänge und/oder einer ersten Faserdicke umfassen kann) und/oder mit einer ersten Faserdichte gefertigt. Die Objektstruktur kann dann mindestens einen weiteren Teilbereich aufweisen und das Verfahren ein Fertigen einer weiteren faserverstärkten Harzschicht in dem weiteren Teilbereich umfassen, wobei die weitere faserverstärkte Harzschicht mit einem zweiten, vom ersten verschiedenen Harz- und/oder Fasermaterial und/oder in einer zweiten, von der ersten verschiedenen Dicke und/oder Faserdichte gefertigt wird.

Auf diese Weise kann das herzustellende Objekt gezielt mit vorgesehenen Eigenschaften beispielsweise hinsichtlich der Steifigkeit in den verschiedenen Teilbereichen hergestellt werden. Insbesondere kann das Objekt optimal an die Anforderungen angepasst werden, die sich aus seiner beabsichtigten Verwendung ergeben.

Eine vorteilhafte Ausführungsform eines erfindungsgemäßen Verfahrens umfasst ein Verbinden mindestens zweier Objektkomponenten mittels der Objektstruktur und der faserverstärkten Harzschicht. Vorzugsweise liegt dabei die Objektstruktur in einem Oberflächenabschnitt an mindestens einer der Objektkomponenten an. Die faserverstärkte Harzschicht und/oder ein vorzugsweise in der Objektstruktur enthaltenes thermoplastisches Material können dabei einer Klebeverbindung dienen. Vorzugsweise ist die faserverstärkte Harzschicht mindestens abschnittweise zwischen der Objektstruktur und mindestens einer der Objektkomponenten angeordnet.

Insbesondere können auf diese Weise die Objektstruktur und die faserverstärkte Harzschicht als solide und beständige Verankerung der Objektkomponenten aneinander eingesetzt werden.

Gemäß einer Ausführungsvariante umfasst ein erfindungsgemäßes Verfahren ein Stabilisieren einer Objektkomponente mittels der Objektstruktur und der faserverstärkten Harzschicht in mindestens einem Bereich; hierbei liegt die Objektstruktur vorzugsweise in einem Oberflächenabschnitt an der Objektkomponente an und dient die faserverstärkte Harzschicht als Klebeverbindung. Somit kann ein herzustellendes Objekt beispielsweise in einem bei seiner Verwendung besonders beanspruchten Bereich gezielt gefestigt werden. Vorzugsweise ist die faserverstärkte Harzschicht mindestens abschnittweise zwischen der Objektstruktur und der Objektkomponente angeordnet.

Die faserverstärkte Harzschicht ist vorzugsweise ein Teil des herzustellenden Objekts. Die Objektstruktur kann ganz oder teilweise ebenfalls Teil des herzustellenden Objekts sein und/oder als Hilfsmittel bei dessen Herstellung dienen.

Gemäß einer Ausführungsform der vorliegenden Erfindung bilden die Objektstruktur und die faserverstärkte Harzschicht in mindestens einem Kontaktbereich eine Haftung aneinander aus. Insbesondere sind Objektstruktur und faserverstärkte Harzschicht in diesem Falle verträglich miteinander insofern, als sie eine Bindung miteinander eingehen, beispielsweise indem sie in einem Kontaktbereich chemisch miteinander reagieren.

Gemäß einer weiteren Ausführungsform bilden Objektstruktur und faserverstärkte Harzschicht in mindestens einem (ggf. weiteren) Kontaktbereich keine Haftung aus, gehen also keine entsprechende Bindung ein. Damit besteht insbesondere die Möglichkeit, mindestens einen Teil der Objektstruktur nach einem Aushärten leicht zu entfernen.

Eine Ausführungsform eines erfindungsgemäßen Verfahrens umfasst ein Entfernen mindestens eines Teils der Objektstruktur nach einem Aushärten der faserverstärkten Harzschicht. Der entfernte Teil der Objektstruktur kann somit als Hilfsmittel bei der Herstellung des herzustellenden Objektes verwendet werden.

Gemäß einer Ausführungsform eines erfindungsgemäßen Verfahrens umfasst das Fertigen der faserverstärkten Harzschicht ein Spritzpressen, eine vakuumgestützte Infusion von Harzmaterial in ein formgebendes Werkzeug und/oder ein Einbringen einer vorimprägnierten Faserhalbzeugs. Die Objektstruktur kann bei einer derartigen Ausführungsform als Verteilungsmittel und/oder als mindestens einen Teil eines Vakuumsacks für das Harzmaterial ausgebildet werden.

Diese Ausführungsform ermöglicht somit ein Ausbilden der Objektstruktur in einer Weise, die vorteilhaft beim Fertigen der faserverstärkten Harzschicht sind. Auf diese Weise können gewünschte Eigenschaften des herzustellenden Objekts gezielt erzeugt werden.

Die Objektstruktur kann ein oder mehrere Materialien wie beispielsweise Keramik, Gummi und/oder Glas umfassen.

Besonders bevorzugt ist eine Ausführungsform, bei der die Objektstruktur ganz oder teilweise aus einem Kunststoff gefertigt wird. Damit kann auf einfache und kostengünstige Weise auch eine komplexe geometrische Form der Objektstruktur erzeugt werden, und die Objektstruktur weist dabei ein relativ geringes Gewicht auf. Insbesondere kann ein duroplastischer und/oder ein thermoplastischer Kunststoff verwendet werden. Eine Verwendung von thermoplastischem Kunststoff erlaubt beispielsweise vorteilhaft ein Anschweißen der Objektstruktur an eine andere Komponente.

Vorteilhaft ist eine Ausführungsform, bei der die Objektstruktur mindestens ein Metall aufweist. Damit können günstige Eigenschaften eines herzustellenden Objekts an dessen Oberfläche erzeugt werden, beispielsweise hinsichtlich Robustheit und/oder elektrischer sowie thermischer Leitfähigkeit. Derart in die Objektstruktur integriert nutzen sich diese Eigenschaften - anders als bei einer Beschichtung des Objekts - kaum ab.

Ein erfindungsgemäßes Objekt ist mittels eines erfindungsgemäßen Verfahrens hergestellt. Insbesondere weist es eine mit Hilfe eines generativen Fertigungsverfahrens und/oder mittels eines

Spritzgießverfahrens hergestellte Objektstruktur sowie in mindestens einem Teilbereich der Objektstruktur eine faserverstärkte Harzschicht auf.

Besonders bevorzugt ist eine Ausführungsform, bei der die faserverstärkte Harzschicht ganz oder teilweise in einem Hohlraum der Objektstruktur angeordnet ist. Ein derartiges Objekt weist bei einem geringen Gewicht eine hohe Festigkeit auf und kann eine spezifisch generierte Oberfläche haben.

Ein derartiges Objekt kann mindestens einen weiteren, mit Luft gefüllten Hohlraum aufweisen. Die Stabilisierung durch die faserverstärkte Harzschicht kann somit lediglich in einem oder mehreren Teilbereich(en) gefertigt werden, die bei einer beabsichtigten Verwendung des Objekts beansprucht werden, wohingegen in anderen Bereichen auf sie verzichtet werden kann. So kann das Gewicht des Objekts weiter reduziert werden.

Im Folgenden werden Merkmale bevorzugter Ausführungsbeispiele der Erfindung anhand von Zeichnungen näher erläutert. Es versteht sich, dass die schematisch dargestellten einzelnen Elemente und Komponenten auch anders kombiniert und/oder ausgebildet sein können als gezeigt und dass die vorliegende Erfindung nicht auf dargestellte Merkmale beschränkt ist.

Es zeigen schematisch:
- Figur 1a -1c:: erfindungsgemäße Fertigungsweisen von faserhaltigen Harzschichten in verschiedenen exemplarischen Objektstrukturen;
- Figur 2:: vier Schritte A - D eines exemplarischen erfindungsgemäßen Verfahrens;
- Figur 3:: ein exemplarisches erfindungsgemäßes Objekt; und
- Figur 4:: ein weiteres exemplarisches erfindungsgemäßes Objekt.

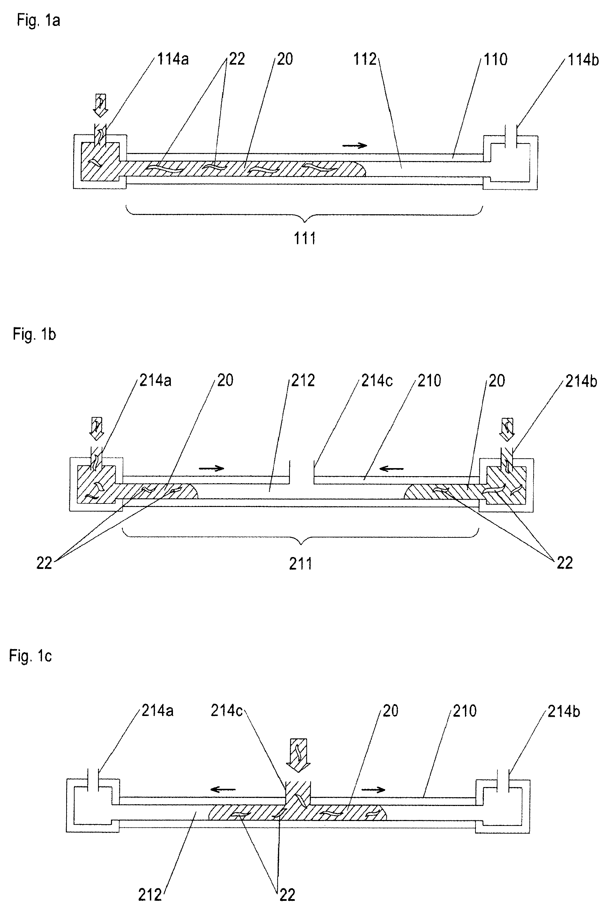

In Figur 1a ist schematisch eine Objektstruktur 110 in einem Querschnitt dargestellt, die erfindungsgemäß (in einem nicht dargestellten Schritt) mit Hilfe eines generativen Fertigungsverfahrens und/oder mittels eines Spritzgießverfahrens gefertigt wurde. Die Objektstruktur weist einen Hohlraum 112 auf, der sich in einem Teilbereich 111 der Objektstruktur erstreckt, und sie umfasst zudem ein Infusionssystem 114a, 114b zum Einleiten von Harzmaterial in den Hohlraum bzw. zum Ablassen von Luft aus dem Hohlraum. In dem in der Figur 1a dargestellten Beispiel ist das Infusionssystem 114a, 114b an einer Peripherie des Teilbereichs 111 angeordnet, so dass eingeleitetes Material von einem Außenrand des Teilbereichs (bzw. des Hohlraums) her eingeleitet werden kann. Die dargestellten Verbindungsabschnitte 114a, 114b zwischen dem Hohlraum 112 und einer Umgebung der Objektstruktur können voneinander getrennte Öffnungen sein oder durch einen Ringspalt verbunden sein, der mindestens teilweise um den Hohlraum herum führt.

Dargestellt in der Figur 1a ist eine derartige Einleitung von Harzmaterial 20 zugleich mit darin enthaltenen Fasern 22 gemäß einer Ausführungsform des erfindungsgemäßen Verfahrens: Die Einleitung erfolgt dabei durch einen Verbindungsabschnitt 114a des Infusionssystems, beispielsweise mit Hilfe von Pressdruck; durch einen Auslass 114b des Infusionssystems kann Luft bzw. sonstiges Gas aus dem Hohlraum entweichen.

In Figur 1b ist in einem Querschnitt eine Objektstruktur 210 gezeigt, die analog in einem Teilbereich 211 einen Hohlraum 212 aufweist und erfindungsgemäß (in einem nicht dargestellten Schritt) mit Hilfe eines generativen Fertigungsverfahrens und/oder mittels eines Spritzgießverfahrens gefertigt wurde. Die Objektstruktur 210 umfasst ein alternatives Infusionssystem 214a, 214b, 214c mit an der Peripherie des Hohlraums 212 (bzw. des Teilbereichs 211) angeordneten Verbindungsabschnitten 214a, 214b (die den Hohlraum 212 mit einer Umgebung der Objektstruktur verbinden) sowie zusätzlich einem Verbindungsabschnitt 214c im Zentrum des Hohlraums (bzw. dessen größter Ausdehnung). Die dargestellten Verbindungsabschnitte 214a, 214b können voneinander getrennt sein oder durch einen Ringspalt verbunden sein, der mindestens teilweise um den Hohlraum herum führt.

In der Figur 1b ist eine simultane Einleitung von Harzmaterial 20 (mit darin enthaltenen Fasern 22) gemäß einer Ausführungsform des erfindungsgemäßen Verfahrens durch die peripheren Verbindungsabschnitte 214a, 214b des Infusionssystems dargestellt. Wie durch die Pfeile angegeben, breitet sich das Harzmaterial 20 im Hohlraum 210 aus. Durch den Verbindungsabschnitt 214c kann dabei Luft aus dem Hohlraum austreten.

In Figur 1c ist die gleiche Objektstruktur 210 wie in Figur 1b gezeigt, in die gemäß einer alternativen Ausführungsform eines erfindungsgemäßen Verfahrens Harzmaterial 20 (mit darin enthaltenen Fasern 22) eingeleitet wird: In diesem Fall erfolgt die Einleitung durch den Verbindungsabschnitt 214c, so dass sich das Harzmaterial vom Zentrum des Hohlraums her nach außen ausbreitet (wie durch die Pfeile angegeben). Durch die Verbindungsabschnitte 214a, 214b kann Luft aus dem Hohlraum austreten.

Die in den Figuren gezeigten Infusionssysteme können jeweils als Teil des herzustellenden Objekts in dieses integriert werden oder nach dem Einleiten des Harzmaterials bzw. nach dessen Aushärten zumindest teilweise entfernt werden.

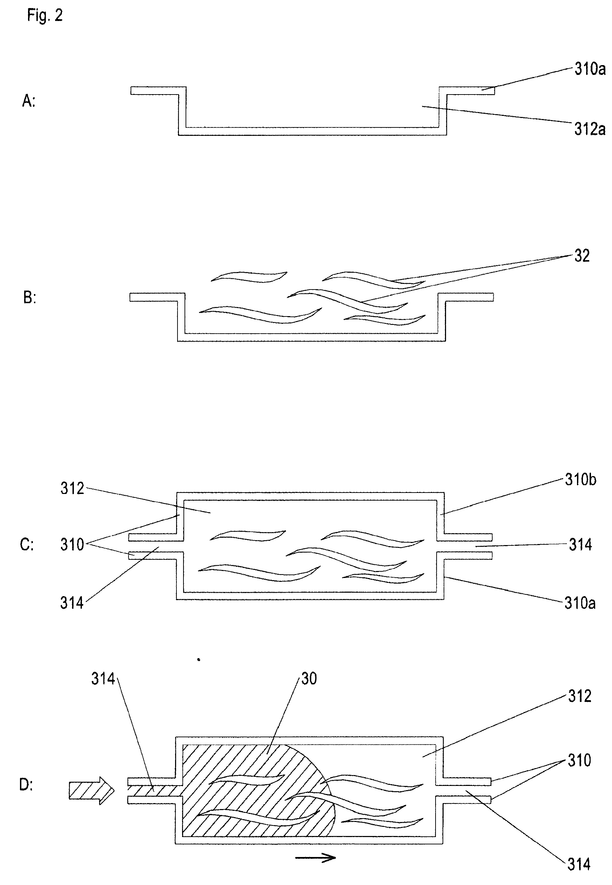

Figur 2 zeigt Verfahrensschritte A - D eines exemplarischen Verfahrens gemäß der vorliegenden Erfindung; die Schritte A - C sind dabei jeweils nach ihrem Abschluss dargestellt.

In Schritt A wurde eine erste Teilstruktur 310a einer Objektstruktur mit Hilfe eines generativen Fertigungsverfahrens und/oder mittels eines Spritzgießverfahrens gefertigt. Die Teilstruktur 310a weist eine Vertiefung (bzw. eine Aushöhlung) 312a auf, in der in Schritt B (z.B. trockenes) Fasermaterial 32 angeordnet wurde. In Schritt C wurde die Vertiefung 312a der ersten Teilstruktur 310a mit dem darin angeordneten Fasermaterial 32 von einer zweiten Teilstruktur 310b abgedeckt; zusammen bilden die Teilstrukturen 310a, 310b eine Objektstruktur 310 mit einem Hohlraum 312 in ihrem Inneren, der zum Teil durch die Vertiefung 312a gebildet wird. Beim Abdecken der Vertiefung durch die zweite Teilstruktur 310b wurde dabei ein Infusionssystem 314 ausgebildet, durch das Harzmaterial in den Hohlraum injiziert werden kann.

Die zweite Teilstruktur 310b kann vorgefertigt vorliegen, beispielsweise in einer standardisierten, für eine Herstellung verschiedenartiger Objekte geeigneten Form. Dadurch kann eine schnelle Herstellung des Objektes realisiert werden. Sie kann mittels eines nichtgenerativen Fertigungsverfahrens, beispielsweise durch Gießen, Extrudieren, Kalandrieren oder Blasformen erzeugt werden oder worden sein.

Alternativ kann die zweite Teilstruktur nach dem Anordnen des Fasermaterials in der Vertiefung 312a mittels eines generativen Fertigungsverfahrens schichtweise auf der ersten Teilstruktur 310a aufgebaut werden; dies erlaubt auf einfache Weise eine spezifische geometrische Ausformung der zweiten Teilstruktur sowie eine materialschonende Herstellung. Das generative Fertigungsverfahren für die zweite Teilstruktur 310b kann dabei dasselbe sein wie das für die Fertigung der ersten Teilstruktur 310a verwendete oder ein anderes, beispielsweise eine Verwendung eines anderen Materials umfassen als das zur Fertigung der ersten Teilstruktur gebrauchte.

In Schritt D wird Harzmaterial 30 durch das Infusionssystem 314 in den Hohlraum 312 der Objektstruktur 310 mit dem darin befindlichen Fasermaterial 32 eingeleitet bzw. eingepresst. Nach dem Aushärten des Harzmaterials entsteht so eine faserverstärkte Harzschicht in dem Hohlraum.

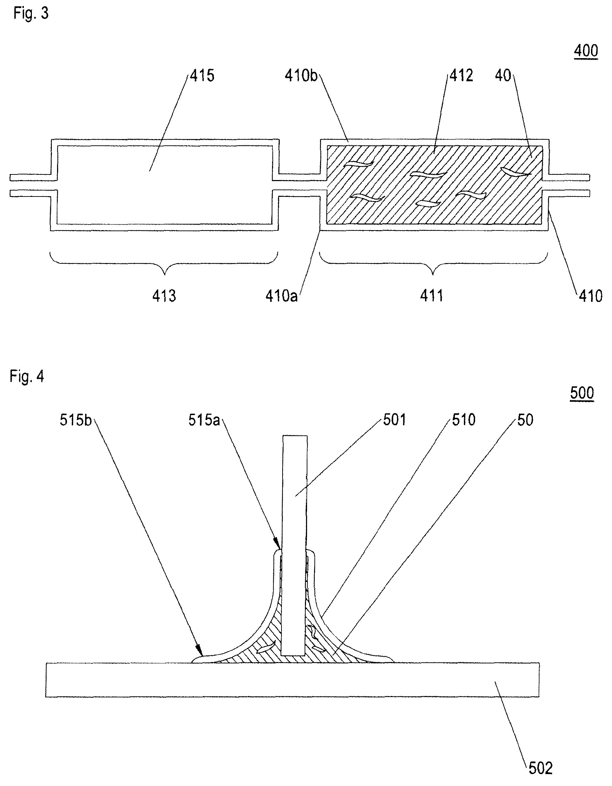

In Figur 3 ist ein Objekt 400 gemäß einer Ausführungsform der vorliegenden Erfindung schematisch im Querschnitt dargestellt. Das Objekt 400 umfasst eine Objektstruktur 410, die mit Hilfe eines generativen Fertigungsverfahrens und/oder eines Spritzgießverfahrens gefertigt wurde. Die Objektstruktur 410 umfasst eine erste Teilstruktur 410a, die Vertiefungen aufweist, die von einer zweiten Teilstruktur 410b abgedeckt wurden. Auf diese Weise sind zwei Hohlräume 412, 415 in der Objektstruktur ausgebildet.

Ein erster der Hohlräume 412 ist mit Fasern und einem Harzmaterial gefüllt, wodurch in einem Teilbereich 411 der Objektstruktur eine faserverstärkte Harzschicht 40 gefertigt wurde. Dadurch weist das Objekt 400 in dem Teilbereich 411 eine gesteigerte Stabilität und Steifigkeit auf. Der zweite Hohlraum 415 hingegen ist mit Gas, beispielsweise Luft gefüllt, was insbesondere dann sinnvoll sein kann, wenn der Bereich 413 bei einer beabsichtigten Verwendung des Objekts 400 keiner besonderen Beanspruchung ausgesetzt ist: Infolge der Gasfüllung hat das Objekt ein relativ geringes Gewicht.

In Figur 4 ist ein alternatives Objekt gemäß einer Ausführungsform der vorliegenden Erfindung im Querschnitt dargestellt. Das Objekt umfasst Objektkomponenten 501, 502, die mit Hilfe einer Objektstruktur 510 und einer faserverstärkten Harzschicht 50 stabil miteinander verbunden sind. Die Objektstruktur 510 ist dabei mit Hilfe eines generativen Fertigungsverfahrens und/oder eines Spritzgießverfahrens gefertigt. Sie umfasst Bereiche 515a, 515b, in denen sie an den Komponenten 501, 502 anliegt. Beispielsweise kann die Objektstruktur mindestens teilweise ein thermoplastisches Material umfassen, das aufgewärmt in einem weichen Zustand in den Bereichen 515a, 515b an die Komponenten 501, 502 angepasst und angeschweißt wurde. Alternativ oder zusätzlich kann das Harzmaterial in der faserverstärkten Harzschicht 50 zur Verklebung dienen. Im dargestellten Ausführungsbeispiel ist die faserverstärkte Harzschicht 50 zwischen den Objektkomponenten und der Objektstruktur angeordnet, die einen mit der faserverstärkten Harzschicht 50 gefüllten Hohlraum ausbilden.

### Bezugszeichen

- 20: Harzmaterial
- 22: Fasermaterial
- 30: Harzmaterial
- 32: Fasermaterial
- 40, 50: faserverstärkte Harzschicht

- 110: Objektstruktur
- 111: Teilbereich
- 112: Hohlraum
- 114a, 114b: Infusionssystem

- 210: Objektstruktur
- 211: Teilbereich
- 212: Hohlraum
- 214a, 214b, 214c: Infusionssystem

- 310: Objektstruktur
- 310a, 310b: Teilstruktur
- 312: Hohlraum
- 312a: Vertiefung
- 314: Infusionssystem

- 400: Objekt
- 410: Objektstruktur
- 410a, 410b: Teilstruktur
- 411: Teilbereich
- 412: Hohlraum
- 413: Teilbereich
- 415: Hohlraum

- 500: Objekt
- 501, 502: Objektkomponente
- 510: Objektstruktur
- 515a, 515b: Kontaktbereich

## Patentansprüche

1. Verfahren zum Herstellen von Objekten (400, 500), das umfasst:
Fertigen einer Objektstruktur (110, 210, 310, 410, 510) mit Hilfe eines generativen Fertigungsverfahrens und/oder mittels eines Spritzgießverfahrens; und
Fertigen einer faserverstärkten Harzschicht (40, 50) in mindestens einem Teilbereich (111, 211, 411) der Objektstruktur.

2. Verfahren gemäß Anspruch 1, wobei die faserverstärkte Harzschicht ganz oder teilweise in einem Hohlraum (112, 212, 312, 412, 415) der Objektstruktur gefertigt wird.

3. Verfahren gemäß Anspruch 2, wobei das Fertigen der faserverstärkten Harzschicht ein Injizieren von Harzmaterial (20, 30) in den Hohlraum umfasst.

4. Verfahren gemäß Anspruch 3, wobei das Injizieren des Harzmaterials durch mindestens ein Infusionssystem (114a, 114b, 214a, 214b, 214c, 314) erfolgt, das an die Objektstruktur angeformt ist.

5. Verfahren gemäß einem der Ansprüche 2 bis 4, bei dem das Fertigen der faserverstärkten Harzschicht ein Einbringen von Fasermaterial (22, 32) in den Hohlraum mittels Druckgas und/oder zusammen mit injiziertem Harzmaterial umfasst.

6. Verfahren gemäß einem der vorhergehenden Ansprüche, wobei die faserverstärkte Harzschicht ganz oder teilweise zwischen einer ersten Teilstruktur (310a) der Objektstruktur und einer zweiten Teilstruktur (310b) der Objektstruktur gefertigt wird.

7. Verfahren gemäß Anspruch 6, wobei die zweite Teilstruktur (310b) eine Folie umfasst und/oder mit Hilfe des oder eines weiteren generativen Fertigungsverfahrens gefertigt wird oder wurde
und/oder wobei das Fertigen der faserverstärkten Harzschicht ein Aufbringen von Fasermaterial (32) auf die erste Teilstruktur umfasst, nach welchem die zweite Teilstruktur (310b) gefertigt oder mit der ersten Teilstruktur (310a) verbunden wird.

8. Verfahren gemäß einem der vorhergehenden Ansprüche, das ein Polymerisieren von Harzmaterial (20, 30) der faserverstärkten Harzschicht (40, 50) umfasst, beispielsweise durch Wärmebehandlung, Bestrahlen mit ultraviolettem Licht und/oder Gammastrahlung.

9. Verfahren gemäß einem der vorhergehenden Ansprüche, wobei das generative Fertigungsverfahren ein 3D-Drucken mittels Schmelzschichtung von Kunststoff, Kunstharz und/oder Verbundmaterial umfasst.

10. Verfahren gemäß einem der vorhergehenden Ansprüche, wobei die faserverstärkte Harzschicht (40, 50) in dem mindestens einen Teilbereich (111, 211, 411) in einer ersten Dicke, mit einem ersten Harz- und/oder Fasermaterial und/oder mit einer ersten Faserdichte gefertigt wird, wobei die Objektstruktur mindestens einen weiteren Teilbereich umfasst, und wobei das Verfahren ein Fertigen einer weiteren faserverstärkten Harzschicht in dem weiteren Teilbereich umfasst, wobei die weitere faserverstärkte Harzschicht mit einem zweiten, vom ersten verschiedenen Harz- und/oder Fasermaterial und/oder in einer zweiten, von der ersten verschiedenen Dicke und/oder Faserdichte gefertigt wird.

11. Verfahren gemäß einem der vorhergehenden Ansprüche, wobei die Objektstruktur und die faserverstärkte Harzschicht (40, 50) zwei oder mehr Objektkomponenten (501, 502) miteinander verbinden und/oder mindestens einen Bereich einer Objektkomponente stabilisieren.

12. Verfahren gemäß einem der vorhergehenden Ansprüche, wobei das Fertigen einer faserverstärkten Harzschicht (40, 50) ein Spritzpressen und/oder eine vakuumgestützte Infusion von Harzmaterial (20, 30) in ein formgebendes Werkzeug umfasst, wobei die Objektstruktur (110, 210, 310) als Verteilungsmittel für das Harzmaterial dient.

13. Verfahren gemäß einem der vorhergehenden Ansprüche, wobei die Objektstruktur und die faserverstärkte Harzschicht
in mindestens einem Kontaktbereich eine Haftung aneinander ausbilden und/oder in mindestens einem Kontaktbereich keine Haftung aneinander ausbilden.

14. Verfahren gemäß einem der vorhergehenden Ansprüche, das ein Entfernen mindestens eines Teils der Objektstruktur von der faserverstärkten Harzschicht nach deren Aushärten umfasst.

15. Objekt (400, 500), das mittels eines Verfahrens gemäß einem der vorstehenden Ansprüche hergestellt ist.
